# EUROPÄISCHE PATENTSCHRIFT

(11) **EP 0 703 048 B1**
(45) Veröffentlichungstag und Bekanntmachung des Hinweises auf die Patenterteilung: **21.10.1998**
(21) Anmeldenummer: 95112362.9
(22) Anmeldetag: 05.08.1995
(51) Int. Cl.: B27C 5/04, B23Q 35/10, B27G 21/00

(54) **Holzbearbeitungsmaschine**
Wood-working machine
Machine de travail du bois

(30) Priorität: 19.08.1994 DE 4429571
(43) Veröffentlichungstag der Anmeldung: 27.03.1996
(73) Patentinhaber: Josef Scheppach Maschinenfabrik GmbH & Co., D-89335 Ichenhausen (DE)
(72) Erfinder: Scheppach, Fritz, D-89335 Ichenhausen (DE)
(74) Vertreter: Munk, Ludwig, Dipl.-Ing.

(56) Entgegenhaltungen:
- EP-A- 0 504 375
- CH-A- 291 579
- DE-A- 3 407 243
- DE-A- 3 931 141
- DE-B- 1 112 824
- FR-A- 2 711 571
- GB-A- 550 950

## Beschreibung

Die Erfindung betrifft eine Holzbearbeitungsmaschine gemäß Oberbegriff des Anspruchs 1.

Ein Anordnung dieser Art ist aus der DE-A 39 31 141 bekannt. Hierbei ist das Anlauforgan mit zwei Winkelstücken verschraubt, die jeweils mit einem Klemmstück verspannbar sind, das in einer T-förmigen Nut eines auf dem Tisch angeordneten Spanfanggehäuses geführt ist. Dieses ist mit zwei seitlichen Laschen versehen, die jeweils ein Langloch aufweisen, das von einer zugeordneten Halteschraube durchsetzt ist, die in ein Gewindeloch des Tischs eingreift.

Die DE-A 34 07 243 zeigt eine Holzbearbeitungsmaschine mit einem Tisch und einem diesen überragenden Fräskopf, wobei ein Anlaufring und ein den Anlaufring aufnehmender Tischaufsatz vorgesehen sind. Der Tischaufsatz besitzt hier eine vertikale Säule, auf welcher der Anlaufring höhenverstellbar aufgenommen ist, und einen horizontalen Haltearm, der mit einem Schlitz versehen und durch diesen durchsetzende Schrauben mit dem Tisch und mit einem auf einer an einem Rand des Tisches angebrachten Führungsschiene aufgenommenen Block verbindbar ist.

Hiervon ausgehend ist es die Aufgabe der vorliegenden Erfindung, eine Anordnung gattungsgemäßer Art mit einfachen und kostengünstigen Mitteln so zu verbessern, daß eine hohe Bedienungsfreundlichkeit und exakte Einstellbarkeit gewährleistet sind.

Diese Aufgabe wird erfindungsgemäß durch das Kennzeichen des Anspruchs 1 gelöst.

Die hier zur Aufnahme des Anlauforgans vorgesehene Tragstange ermöglicht in vorteilhafter Weise nicht nur eine einfache und sichere Höhenverstellung, sondern stellt auch sicher, daß das Anlauforgan auf einfache Weise nachträglich an der Tragstange bzw. den Tragstangen befestigt werden kann. Außerdem ergeben die erfindungsgemäßen Maßnahmen eine dem kastenförmigen Tischaufsatz zugeordnete Stell- und Führungseinrichtung, die eine exakte und bedienungsfreundliche Einstellung ermöglicht. Mit den erfindungsgemäßen Maßnahmen werden daher die Nachteile der bekannten Anordnungen vollständig beseitigt.

Vorteilhafte Ausgestaltungen und zweckmäßige Fortbildungen der übergeordneten Maßnahmen sind in den Unteransprüchen angegeben und aus der nachstehenden Beispielsbeschreibung entnehmbar.

In der nachstehend beschriebenen Zeichnung zeigen:
- Figur 1a: eine in Bearbeitungsrichtung gesehene Seitenansicht einer Tischfräse mit ober dem Werkzeug positioniertem Bogenfräsanschlag teilweise im Schnitt
- Figur 1b: die Anordnung gemäß Figur 1a mit unter dem Werkzeug positioniertem Bogenfräsanschlag,
- Figur 2: eine Draufsicht auf die Anordnung gemäß Figur 1 und
- Figur 3: die Einzelheit "X" aus Figur 1a in vergrößerter Darstellung.

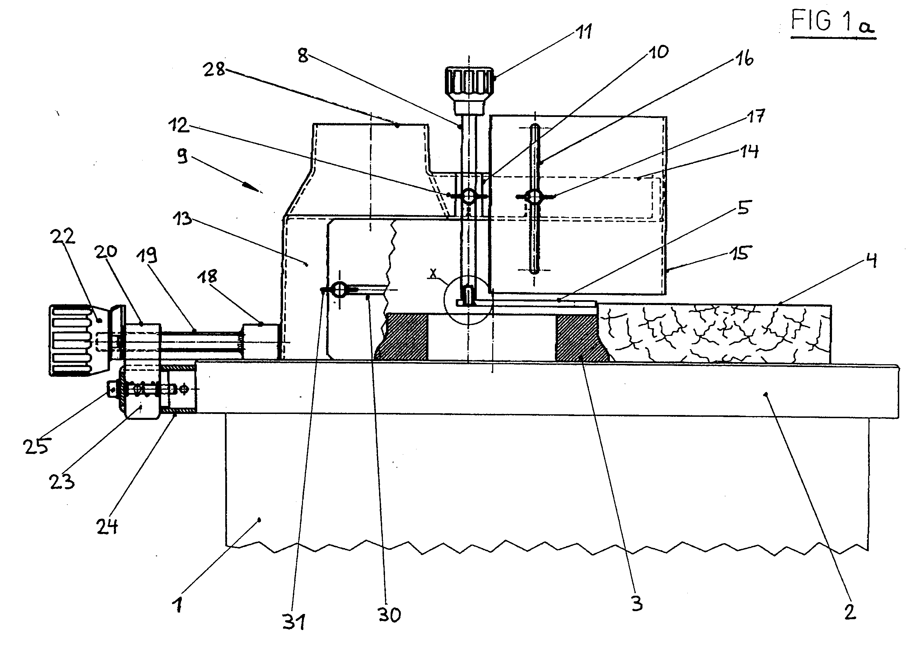

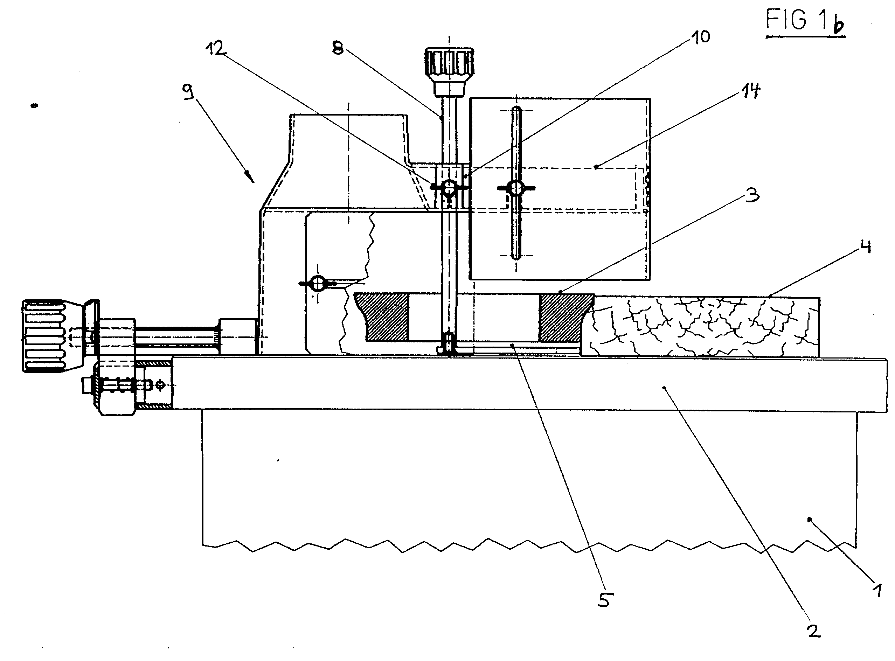

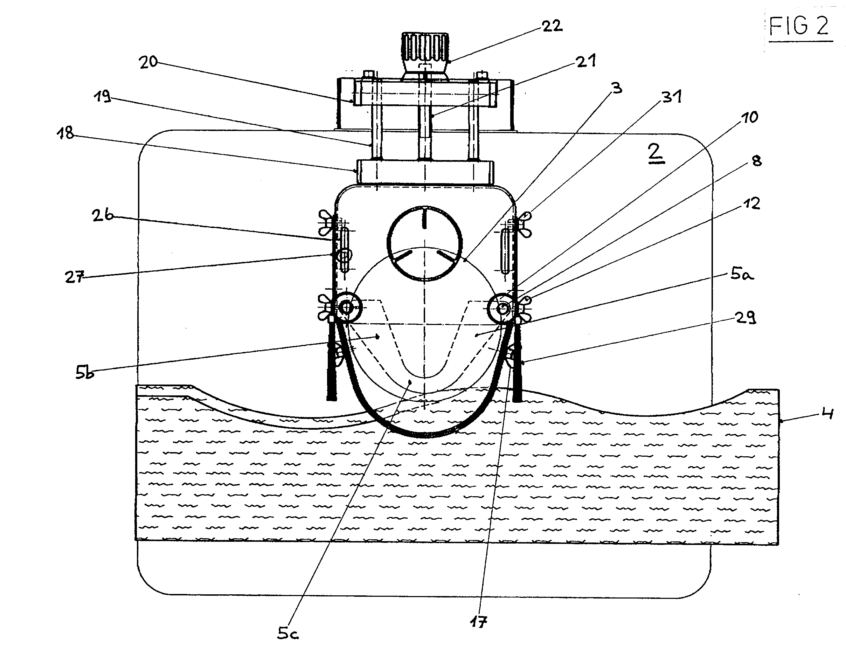

Die den Figuren 1a,b und 2 zugrunde liegende Tischfräse enthält einen auf einem Maschinengestell 1 angeordneten Tisch 2, der von einem auf einer tischnormalen Welle aufgenommenen Fräskopf 3 überragt ist, an dem ein Werkstück 4 zum Fräsen einer Randkontur entlangführbar ist.

Die zu bearbeitende Werkstückflanke besitzt hier, wie am besten aus Figur 2 erkennbar ist, eine wellenförmige Konfiguration. Zur Einhaltung einer gleichmäßigen Schnittiefe ist daher ein Anlauforgan 5 vorgesehen, an dem das Werkstück 4 mit der zu bearbeitenden, wellenförmigen Seitenflanke während der Vorschubbewegung in Anlage gehalten wird.

Das Anlauforgan 5 ist als aus plattenförmigem Material hergestellte Kufe ausgebildet. Diese besitzt, wie am besten aus Figur 2 hervorgeht, zwei unter einem spitzen Winkel gegeneinander geneigte Schenkel 5a,b, die durch einen Bogen 5c miteinander verbunden sind. Im Bereich des Bogens 5c ist der Abstand der Randkontur des Anlauforgans 5 von der Achse des Fräskopfes 3 am kleinsten. Entlang der Schenkel 5a,b, nimmt dieser Abstand nach innen, das heißt in vom Werkstück 4 weglaufender Richtung, zu. Bei Anlage des Werkstücks 4 am Bogen 5c ergibt sich der tiefste Werkstückeingriff. Die Schenkel 5a,b verhindern einen plötzlichen, tieferen Werkstückeinzug und machen die Verwendung sogenannter Anlaufleisten entbehrlich.

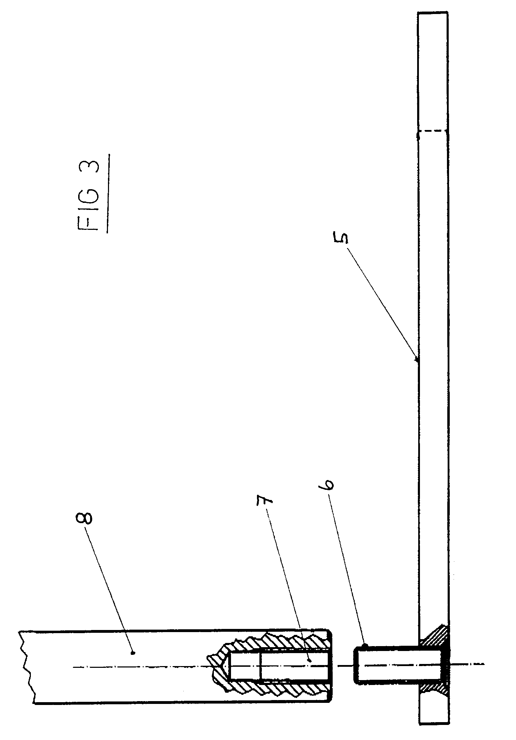

Die das Anlauforgan 5 bildende Kufe ist im Bereich der Enden der Schenkel 5a,b, wie am besten aus Figur 3 ersichtlich ist, mit eingepreßten, tischnormalen Gewindestiften 6 versehen, auf die an ihrem unteren Ende mit entsprechenden Gewindebohrungen 7 versehene Tragstangen 8 aufschraubbar sind. Die Tragstangen 8 werden dabei bis zum Aufsitzen ihrer unteren Stirnfläche auf dem plattenförmigen Anlauforgan 5 aufgeschraubt, wodurch sich eine stabile Verbindung und gleichzeitig eine exakt rechtwinklige Anordnung ergeben.

Die Tragstangen 8 sind auf einem auf dem Tisch 2 verstellbar aufgenommenen Tischaufsatz 9 mit Verschiebefreiheitsgrad in Höhenrichtung gelagert. Hierzu ist der Tischaufsatz 9, wie die Figuren 1a, 1b und 2 weiter zeigen, mit den Tragstangen 8 zugeordneten Lagerbüchsen 10 versehen, die von der jeweils zugeordneten Tragstange 8 durchgriffen sind. Durch Verschieben der Tragstangen 8, die an ihrem oberen Ende mit einem Betätigungskopf 11 versehen sind, läßt sich somit jede gewünschte Höhenposition des Anlauforgans 5 einstellen. Dieses kann, wie in Figur 1a gezeigt, oberhalb des Fräskopfes 3 positioniert sein. Selbstverständlich wäre es auch denkbar, das Anlauforgan 5 unterhalb des Fräskopfes 3 zu positionieren, wie Figur 1b zeigt. Zum Fixieren der eingestellten Position sind im Bereich der Führungsbüchsen 10 vorgesehene, mit den Tragstangen 8 zusammenwirkende Klemmschrauben 12 vorgesehen.

Die Führungsstangen 8 sind hier als Rundstangen mit kreisförmigem Querschnitt ausgebildet, sodaß es möglich ist, die die jeweils zugeordnete Führungsbüchse 10 durchgreifende Tragstange 8 auf den zugeordneten Gewindestift 6 aufzuschrauben. Der Betätigungsknopf 11 ermöglicht dabei einen festen Anzug und eine einfache Bedienung. Sofern kein kuvenförmiges Anlauforgan hier vorliegende Art benötigt wird, wird dieses einfach durch entsprechende Betätigung der Tragstangen 8 abgenommen. An diesen können dann andere Führungselemente aufgenommen werden, beispielsweise einem auf der Maschinenwelle aufgenommenen Anlaufring Zugeordnete Anlaufleisten.

Der Tischaufsatz 9 besteht aus einem auf dem Tisch 2 aufsitzenden, den Fräskopf 3 teilweise übergreifenden, bearbeitungsseitig offenen Kasten 13, von dem ein mit Tischabstand angeordneter, über den Fräskopf 3 und teilweise auch das Werkstück 4 auskragender, tischparalleler Ansatz 14 absteht. In diesen sind im dargestellten Beispiel die Führungsbüchsen 10 für die Tragstangen 8 integriert. Das kufenförmige Anlauforgan 5 überbrückt die lichte Weite des Kastens 13. Die Führungsbüchsen 10 befinden sich daher im Bereich der seitlichen Flanken des kastennahen Endes des Ansatzes 14. Dies stellt sicher, daß die Tragstangen 8 bei unter dem Fräskopf 3 positioniertem Bogenfräsanschlag 5 nicht in Kollision mit dem Fräskopf 3 kommen, wie Figur 1b erkennen läßt. Im dargestellten Beispiel trägt der vordere werkstückseitige Bereich des Ansatzes 14 eine als Zugriffsschutz fungierende Abdeckblende 15, die einen Zugang zum Bearbeitungsbereich sperrt. Die Abdeckblende 15 ist hier schalenförmig an die Außenkontur des Ansatzes 14 angelegt und gegenüber diesem in der Höhe verstellbar angeordnet. Hierzu ist die Abdeckblende 15, wie am besten aus Figur 1 erkennbar ist, mit tischnormal verlaufenden Schlitzen 16 versehen, in die ansatzseitige Klemmschrauben 17 eingreifen.

Der gesamte Tischaufsatz 9 ist zur Tiefeneinstellung des Anlauforgans 5 quer zur Vorschubrichtung des Werkstücks 4 verschiebbar. Hierzu ist der Tischaufsatz 9 mittels einer Stell- und Führungseinrichtung mit dem Tisch 2 verbunden. Die Stell- und Führungseinrichtung ist am Tischaufsatz 9 aufgenommen und über eine Steckverbindung mit dem Tisch 2 verbindbar, was eine einfache Abnehmbarkeit des gesamten Tischaufsatzes 9 samt zugeordneter Stell- und Führungseinrichtung ermöglicht.

Die genannte Stell- und Führungseinrichtung enthält von einer an der werkstückfernen Rückseite des Kastens 13 des Tischaufsatzes 9 angebrachten Verstärkungsschiene 18 nach hinten abstehende Führungsstangen 19, die in zugeordnete Führungsbohrungen einer zur Verstärkungsschiene 18 parallalen Lagerschiene 20 eingreifen. Zwischen den beiden Führungsstangen 19 ist, wie Figur 2 am besten zeigt, eine Gewindestange 21 vorgesehen, welche die Lagerschiene 20 ebenfalls durchgreift und mit einer an der Lagerschiene 20 abstützbaren Stellmutter 22 zusammenwirkt. Diese ist hier als Betätigungsknopf ausgebildet.

Die Lagerschiene 20 ist, wie am besten aus Figur 1 erkennbar ist, mit nach unten abstehenden Steckzapfen 23 versehen, die in zugeordnete Ausnehmungen einer an der hinteren Seitenflanke des Tisches 2 befestigten Anbaukonsole 24 einsteckbar sind. Zur Bewerkstelligung eines spielfreien Sitzes und zur Sicherung der Position können Fixierschrauben 25 vorgesehen sein.

Der Tischaufsatz 9 ist, wie aus Figur 2 entnehmbar ist, im Bereich des Kastens 13 mit zu den vorschubnormalen Führungsstangen 19 parallelen, vorschubnormalen Schlitzen 26 versehen, durch die mit zugeordneten Gewindebohrungen des Tisches 2 in Eingriff bringbare Klemmschrauben 27 durchführbar sind. Bei gelöster Klemmverbindung ist der Tischaufsatz 9 durch Betätigung der Stell- und Führungseinrichtung gegenüber dem Tisch 2 in vorschubnormaler Richtung verschiebbar. Bei angezogenen Klemmschrauben 27 ergibt sich eine starre, spielfreie Verbindung.

Der Kasten 13 des Tischaufsatzes 9 ist mit einem nach oben abgehenden Anschlußstutzen 28 für einen Absaugschlauch versehen. Im Bereich der Seitenflanken des Tischaufsatzes 9 sind am Werkstück 4 streifende Bürsten 29 vorgesehen, die in der Tiefe einstellbar sind. Hierzu sind die Bürstenhalter, wie am besten aus Figur 1 erkennbar ist, mit entsprechenden Schlitzen 30 versehen, durch die kastenseitige Klemmschrauben 31 durchgreifen.

## Patentansprüche

1. Holzbearbeitungsmaschine mit einem Tisch (2) und einem diesen überragenden Fräskopf (3), der von einem auf dem Tisch (2) aufnehmbaren, bearbeitungsseitig offenen, kastenförmigen Tischaufsatz (9) zumindest teilweise übergriffen ist, der ein dem Fräskopf (3) zugeordnetes Anlauforgan (5) trägt, an dem mit dem Fräskopf (3) in Bearbeitungseingriff bringbare Werkstücke (4) führ- und abstützbar sind, wobei wenigstens ein das Anlauforgan (5) tragender Halter vorgesehen ist, der zur Höhenverstellung des Anlauforgans (5) in einer zugeordneten, tischnormalen Führung (10) des Tischaufsatzes (9) höhenverstellbar aufgenommen und fixierbar ist, der seinerseits zur Tiefenverstellung des Anlauforgans (5) quer zur Werkstückvorschubrichtung verstellbar auf dem Tisch (2) angeordnet ist, **dadurch gekennzeichnet, daß** der das Anlauforgan (5) tragende Halter als Tragstange (8) ausgebildet ist, die am oberen Ende mit einem Betätigungskopf (11) und unten mit einem mit dem Anlauforgan (5) in Gewindeeingriff bringbaren Gewindebereich (7) versehen ist, und daß im Bereich der von der Bedienungsseite abgewandten Längskante des Tisches (2) eine Anbaukonsole (24) vorgesehen ist, auf der eine den Tisch (2) überragende Lagerschiene (20) aufgenommen ist, die mit Führungen für rückwärtig vom Tischaufsatz (9) abstehende Führungsstangen (19) versehen ist und an der eine mit einer vom Tischaufsatz (9) abstehenden Gewindestange (21) zusammenwirkende Stellmutter (22) abgestützt ist.

2. Holzbearbeitungsmaschine nach Anspruch 1, **dadurch gekennzeichnet, daß** die Lagerschiene (20) mit in zugeordnete Ausnehmungen der Anbaukonsole (24) einführbaren, durch Sicherungselemente fixierbaren Steckzapfen (23) versehen ist.

3. Holzbearbeitungsmaschine nach Anspruch 1 oder 2, **dadurch gekennzeichnet, daß** am Tischaufsatz (9) eine der Lagerschiene (20) gegenüberliegende Verstärkungsschiene (18) festlegbar ist, von der die Führungsstangen (19) und die Gewindestange (21) abstehen.

4. Holzbearbeitungsmaschine nach einem der Ansprüche 1 - 3, **dadurch gekennzeichnet, daß** der Tischaufsatz (9) mit zu den Führungsstangen (19) parallelen Schlitzen (26) versehen ist, in die tischseitig festlegbare Halteschrauben (27) eingreifen.

5. Holzbearbeitungsmaschine nach einem der vorhergehenden Ansprüche, **dadurch gekennzeichnet, daß** das Anlauforgan (5) als Kufe mit V-förmig gegeneinander geneigten, durch einen Bogen (5c) miteinander verbundenen Schenkeln (5a,b) ausgebildet ist, die jeweils an einer mittels einer Klemmeinrichtung fixierbaren Tragstange (8) befestigt sind.

6. Holzbearbeitungsmaschine nach Anspruch 5, **dadurch gekennzeichnet, daß** die das Anlauforgan (5) bildende Kufe die lichte Weite des Tischaufsatzes (9) überbrückt.

7. Holzbearbeitungsmaschine nach einem der vorhergehenden Ansprüche, **dadurch gekennzeichnet, daß** die Tragstange(n) (8) als Rundstange(n) ausgebildet ist (sind).

8. Holzbearbeitungsmaschine nach Anspruch 7, **dadurch gekennzeichnet, daß** die Tragstange(n) (8) an ihrem unteren Ende eine Gewindebohrung (7) aufweist (aufweisen), die zum Eingriff mit einem zugeordneten Gewindestift (6) des Anlauforgans (5) bringbar ist.

9. Holzbearbeitungsmaschine nach einem der vorhergehenden Ansprüche, **dadurch gekennzeichnet, daß** der Tischaufsatz (9) einen von einem haubenförmigen Kastenteil (13) werkstückseitig abstehenden, mit Abstand oberhalb des Tisches (2) angeordneten Ansatz (14) aufweist, der die den Tragstangen (8) zugeordneten Führungen (10) enthält und an dem eine zumindest teilweise umlaufende Abdeckblende (15) höhenverstellbar festlegbar ist.

## Claims

1. A wood-working machine comprising a table (2) and a milling head (3) rising above it, said milling head being at least partly overlapped by a case-like table top (9) being accomodatable on the table (2) and being open on the processing side, said table top (9) carrying a stopping element (5) being related to the milling head (3), at said stopping element workpieces (4) being engagable with the milling head (3) for processing are guidable and supportable, thereby at least one support carrying said stopping element (5) is provided which is adjustable in height and fixable for adjusting the height of the stopping element (5) in an related table normal guide (10) of the table top (9) which for his part is arranged transversely adjustably to the workpiece advance direction on the table for adjusting the depth of the stopping element (5), **characterized in that** the support carrying the stopping element (5) is formed as a supporting rod (8) being provided at the upper end with an operating head (11) and below with a threaded area (7) which may be brought into threaded engagement with the stopping element, and that in the area of the longitudinal edge of the table (2) turned off the operating side an annexed console (24) is provided receiving a bearing rail (20) on it projecting over the table (2) and being provided with guides for guidng rods (19) projecting backwardly from the table top (9) and at which bearing rail a threaded rod (21) projecting from the table top (9) is supported cooperating with an adjusting nut (22).

2. A wood-working machine according to claim 1, **characterized in that** the bearing rail (20) is provided with socket pins (23) being insertable into related recesses of the annexed console (24) and being fixable by securing elements.

3. A wood-working machine according to claim 1 or 2, **characterized in that** at the table top (9) a reinforcing rail (18) is fixable being opposite to the bearing rail (20) and from which the guiding rods (19) and the threaded rod (21) project out.

4. A wood-working machine according to anyone of claims 1-3, **characterized in that** the table top (9) is provided with slots (26) being parallel to the guiding rods (19), fixing screws (27) fixable on the table engaging with said slots.

5. A wood-working machine according to anyone of the preceding claims, **characterized in that** the stopping element (5) is formed as a rocker having legs (5a, b) being inclined towards each other in a V-shaped manner and being connected with each other by a bow (5c), said legs are each fixed at a supporting rod (8) being fixable by means of a clamping device.

6. A wood-working machine according to claim 5, **characterized in that** the rocker forming the stopping element (5) bridges the inner width of the table top (9).

7. A wood-working machine according to anyone of the preceding claims, **characterized in that** the supporting rod(s) (8) is (are) formed as a round rod.

8. A wood-working machine according to claim 7, **characterized in that** the supporting rod(s) (8) comprise(s) at its lower end a threaded bore which is engagable with a related threaded pin (6) of the stopping element (5).

9. A wood-working machine according to anyone of the preceding claims, **characterized in that** the table top (9) comprises a shoulder (14) projecting from a hood-like case part (13) on the workpiece side and being arranged with a distance above the table (2), said shoulder comprising the guides (10) being related to the supporting rods (8) and at which shoulder a cover (15) surrounding it at least partly is fixable adjustably in height.

## Revendications

1. Machine à travailler le bois comportant une table (2) et une tête de fraisage (3) dépassant celle-ci et étant au moins partiellement surmontée par un capot (9) en forme de caisse, ouvert du côté de l'usinage, pouvant être positionné sur la table (2), portant un organe d'avancement (5) affecté à la tête de fraisage (3) sur lequel les pièces à usiner (4) en prise avec la tête de fraisage (3) peuvent être guidées et soutenues, où au moins un support portant l'organe d'avancement (5) est prévu, lequel, pour permettre le réglage en hauteur de l'organe d'avancement (5), est logé et peut être fixe dans un guide (10) du capot (9) correspondant à la normale de la table, le support de son côté étant disposé sur la table (2) réglable transversalement par rapport à l'avance de l'outil pour permettre le réglage de la profondeur de l'organe d'avancement, **caractérisée en ce que** le support portant l'organe d'avancement (5) est conçu comme une tige porteuse (8) munie à son extrémité supérieure d'une tête d'actionnement (11) et en bas d'une zone filetée (7) pouvant s'engrener avec l'organe d'avancement (5), et ce que, le long de l'arête longitudinale de la table, dans la zone opposée au côté opérateur, est prévue une console annexe (24) sur laquelle est monté un rail d'appui (20) dépassant la table (2) et comportant des guidages pour des tiges de guidage (19) écartées par l'arrière du capot de table (9) et sur lequel un écrou de réglage (22) concourant avec une tige filetée (21) s'écartant du capot de table (9) se trouve en appui.

2. Machine à travailler le bois selon la revendication 1, **caractérisée en ce que** le rail d'appui (20) est équipé de pivots d'emboîtement (23) pouvant pénétrer dans des évidements de la console annexe (24) et pouvant être fixés par des éléments d'arrêt.

3. Machine à travailler le bois selon les revendications 1 ou 2, **caractérisée en ce que** sur le capot de table (9) peut être fixé un rail de renforcement (18) opposé au rail d'appui (20) et duquel s'écartent les tiges de guidage (19) et la tige filetée (21).

4. Machine à travailler le bois selon l'une des revendications 1 à 3, **caractérisée en ce que** le capot de table (9) est pourvu de fentes (26) parallèles aux tiges de guidage (19) dans lesquelles s'engagent des vis de retenue (27) pouvant être fixées du côté de la table.

5. Machine à travailler le bois selon l'une des revendications précédentes, **caractérisée en ce que** l'organe d'avancement (5) est conçu sous la forme d'un patin dont les jambes (5a,b), inclinées en forme de V l'une par rapport à l'autre et reliées par un arc (5c), sont fixées chacune à une tige porteuse (8) pouvant être fixée au moyen d'un dispositif de serrage.

6. Machine à travailler le bois selon la revendication 5, **caractérisée en ce que** le patin constituant l'organe d'avancement (5) se superpose à la portée libre du capot de table (9).

7. Machine à travailler le bois selon l'une des revendications précédentes, **caractérisée en ce que** la (les) tige(s) porteuse(s) (8) sont constituée(s) par une tige ronde.

8. Machine à travailler le bois selon la revendication 7, **caractérisée en ce que** la (les) tige(s) porteuse(s) (8) présente(nt) à son (leur) extrémité inférieure, un alésage fileté (7) pouvant être mis en prise avec une goupille filetée (6) correspondante de l'organe d'avancement (5).

9. Machine à travailler le bois selon l'une des revendications précédentes, **caractérisée en ce que** le capot de table (9) présente une saillie (14) s'écartant du côté de la pièce à usiner d'un élément de caisse en forme de chapeau (13) et disposée à une distance au dessus de la table (2) qui renferme les guidages (10) affectés aux tiges porteuses (8) et sur laquelle un écran de protection (15) l'entourant au moins partiellement peut être monté de façon à être réglable en hauteur.
